# EUROPÄISCHE PATENTSCHRIFT

(11) **EP 0 532 792 B1**
(45) Veröffentlichungstag und Bekanntmachung des Hinweises auf die Patenterteilung: **19.11.1997**
(21) Anmeldenummer: 91116051.3
(22) Anmeldetag: 20.09.1991
(51) Int. Cl.: H04Q 11/04

(54) **Digitale Fernmeldevermittlungsanlage**
Digital telecommunications exchange
Central numérique de télécommunication

(43) Veröffentlichungstag der Anmeldung: 24.03.1993
(73) Patentinhaber: SIEMENS AKTIENGESELLSCHAFT, 80333 München (DE)
(72) Erfinder: Hesse, Dieter, W-8000 München 71 (DE)

(56) Entgegenhaltungen:
- ELECTRICAL COMMUNICATION Bd. 56, Nr. 2/3, 1. Januar 1982, HARLOW Seiten 135 - 147; S. DAS ET AL: 'ITT 1240 Digital Exchange Digital Hardware Description'
- ELECTRICAL COMMUNICATION Bd. 56, Nr. 2/3, 1. Januar 1982, HARLOW Seiten 126 - 134; R. BONAMI ET AL: 'ITT 1240 Digital Exchange Architecture'
- PROCEEDINGS OF THE INTERNATIONAL SWITCHING SYMPOSIUM, 28 MAI -1 JUNI 1990,BAND 4 Seiten 7-14, STOCKHOLM SE J.P. GLON ET AL: 'AN ATM Switching Unit Architecture for BISDN'
- PROCEEDINGS OF THE INTERNATIONAL SWITCHING SYMPOSIUM, 28 MAI -1 JUNI 1990, BAND 6 SEITEN 87-92, STOCKHOLM SE G. DOMANN: 'Two Years of Experience with Broadband ISDN Field Trial'
- ELECTRICAL COMMUNICATION Bd. 56, Nr. 1, 1981, HARLOW Seiten 45 - 56; G. TOLUSSO ET AL: 'Application of Digital Control to Handling Non-Voice Services'

## Beschreibung

Die Erfindung betrifft eine digitale Fernmeldevermittlungsanlage für die Vermittlung von Sprach- Video- und Datensignalen.

Derartige Vermittlungsanlagen werden z.Bsp. in den Artikeln "ITT 1240 Digital Exchange Hardware Description" von S. DAS und "ITT 1240 Digital Exchange Architecture" von R. Bonami aus ELECTRICAL COMMUNICATION, Bd. 56, Nr. 2/3, 1982 beschrieben.

Die Entwicklung künftiger Fernmeldevermittlungsanlagen geht in Richtung einer Integration der Fernmeldedienste Sprach- Video- und Datenvermittlung.

Hierzu wird ein universeller Netzknoten mit einem einheitlichen Koppelfeld für die Durchschaltung von Schmalband- und Breitbandinformationen benötigt, das Durchschaltegeschwindigkeiten von 10 Gb/s für Schmalbandverbindungen zu in der Summe bis zu 600 Gb/s für Breitbandverbindungen und beim Einsatz als Cross-Connector erbringen muß.

Bei der Architektur von Rechnern treten mit steigenden Leistungsanforderungen, beispielsweise im Zusammenhang mit Simulationsrechnungen, immer mehr sogenannte Massiv-Parallel-Rechner in den Vordergrund. Bei solchen Rechnern arbeitet eine große Vielzahl von Prozessoren (z. B. 10 000 bis 20 000), die für sich genommen nicht besonders schnell sind, parallel an der Lösung eines Problems. Die Prozessoren kommunizieren hierbei über Verbindungsnetzwerke hoher Leistungsfähigkeit miteinander, für die in absehbarer Zeit Standardbausteine zur Verfügung stehen werden.

Die Aufgabe der Erfindung besteht nun darin, eine Architektur für eine Fernmeldevermittlungsanlage anzugeben, die eine einheitliche Behandlung von Sprach, Bild- und Dateninformationen gestattet und für die der zu erwartende Technologiefortschritt auf dem Gebiet der Hochleistungs-Parallel-Rechner spezifisch genutzt werden kann.

Diese Aufgabe wird erfindungsgemäß gelöst durch eine Vielzahl gleichartiger, jeweils einen lokalen Speicher aufweisender Vermittlungssteuereinheiten, die über ein der Leitungsverbindungsherstellung dienendes Koppelnetz untereinander verbindbar sind, wobei dieses Koppelnetz in seiner Durchschalteleistung derart weit über den Anforderungen im Zusammenhang mit der eigentlichen Leitungsverbindungsherstellung liegt, daß jeweils eine große Mehrzahl der Vermittlungssteuereinheiten für eine teilweise parallel ablaufende Abwicklung sowohl den Anschlußbereich als auch den Zentralbereich der Vermittlung betreffenden kleinen in Zusammenhang mit ein und derselben Verbindung stehenden Teiloperationen herangezogen werden kann und dadurch daß, einem Teil dieser Vermittlungssteuereinheiten Prozessoren zur Abwicklung von in ihrer Komplexität über diejenige der Teiloperationen hinausgehenden mit der betreffenden Verbindung in Zusammenhang stehenden Spezialoperationen zugeordnet sind.

Aufgrund des erfindungsgemäßen Konzepts ergibt sich eine Universalvermittlung, über die sowohl im Synchronous Transfer Mode (STM) als auch im Asynchronous Transfer Mode (ATM) übertragene Informationen übermittelt werden können, ohne daß ein einheitliches externes Format gefordert werden muß, was bei ATM-Zellen als solches Format wegen des in diesem Fall unter Umständen mehrfachen Paketieren und Depaketieren der STM-Informationen zu Laufzeit- bzw. Echoproblemen führen könnte. Das koppelnetzinterne Zellenformat ist vielmehr variabel lang, so daß es von einem Okttet, also der Kanalzeitspanne von Schmalbanddiensten, beginnen bis hin zur Länge von ATM-Zellen und mehr aufnehmen kann.

Da die große Mehrzahl der verwendeten Prozessoren einheitlich ist, ergibt sich ein Hardwareaufbau von relativ geringer Typenvielfalt.

Gemäß einer weiteren Ausgestaltung der Erfindung bildet das Koppelnetz eine zentrale Einheit und arbeitet mit gleichartigen vorzugsweise räumlich abgesetzten Einheiten zusammen, über die Verbindungen zu Teilnehmerleitungen hergestellt werden.

Gemäß einer anderen weiteren Ausgestaltung der Erfindung ist das Koppelnetz in im Hinblick auf die Herstellung von Verbindungen zu Teilnehmerleitungen, zu Verbindungsleitungen und zu Bedienungs- und Wartungseinrichtungen getrennte Untereinheiten gegliedert, die durch Übertragungseinrichtungen miteinander verbunden sind.

Aufgrund dieser Ausgestaltungen ist Flexibilität in einem Fall im Hinblick auf geografische Schwerpunkte, im anderen Fall im Hinblick auf Beschaltungsschwerpunkte gegeben.

In weiteren Unteransprüchen angegebene weitere Ausgestaltungen betreffen die unterschiedliche Ergänzung der großen Vielzahl von Prozessoren durch unterschiedliche Spezialprozessoren in unterschiedlichen Kombinationen, durch die flexibel auf die durch Verkehrsart und zu erwartende Verkehrslast bedingten Notwendigkeiten reagiert werden kann.

Bei all diesen Ausgestaltungen ist es aufbaumäßig von Vorteil, daß gemäß noch einem anderen Unteranspruch zwischen dem Koppelfeld und den Vermittlungseinheiten sowie zwischen diesen und den ihnen zugeordneten Spezialprozessoren einheitliche Schnittstellen vorgesehen sind.

Nachstehend wird die Erfindung anhand von Ausführungsbeispielen unter Bezugnahme auf eine Zeichnung näher erläutert.

In der Zeichnung zeigen:
FIG 1 die Struktur einer erfindungsgemäßen Fernmeldevermittlungsanlage,
FIG 2 eine symbolische Darstellung einer solchen Anlage zur Veranschaulichung der Zusammenarbeit der Prozessoren und
FIG 3 und 4 Strukturvarianten der erfindungsgemäßen Fernmeldevermittlungsanlage.

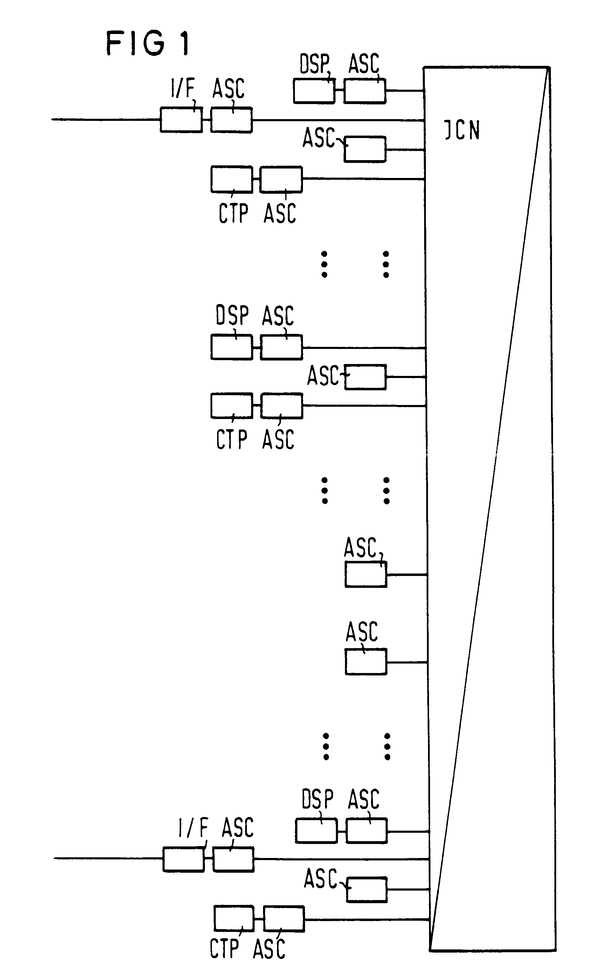

Die erfindungsgemäße Fernmeldeanlage gemäß FIG 1 besteht im wesentlichen aus einem Koppelnetz ICN und aus einer Vielzahl daran angeschlossener Vermittlungssteuereinheiten ASC, die unter sich gleich sind. Einem kleineren Teil der Vermittlungssteuereinheiten ASC sind Spezialprozessoren zugeordnet, nämlich digitale Signalprozessoren DSP, Steuerprozessoren CTP und Schnittstellenprozessoren I/F.

Der Anschluß von Teilnehmerleitungen, von mit Teilnehmerkonzentratoren verbindenden Multiplexleitungen und Verbindungsleitungen zu anderen Vermittlungsstellen, erfolgt über die erwähnten Schnittstellenprozessoren I/F.

Das Koppelnetz ICN dient bei dieser Struktur einer Vermittlungsstelle nicht mehr in erster Linie der Leitungsverbindungsherstellung, sondern in erheblichem Umfang einer Kommunikation der angeschlossenen Vermittlungssteuereinheiten untereinander.

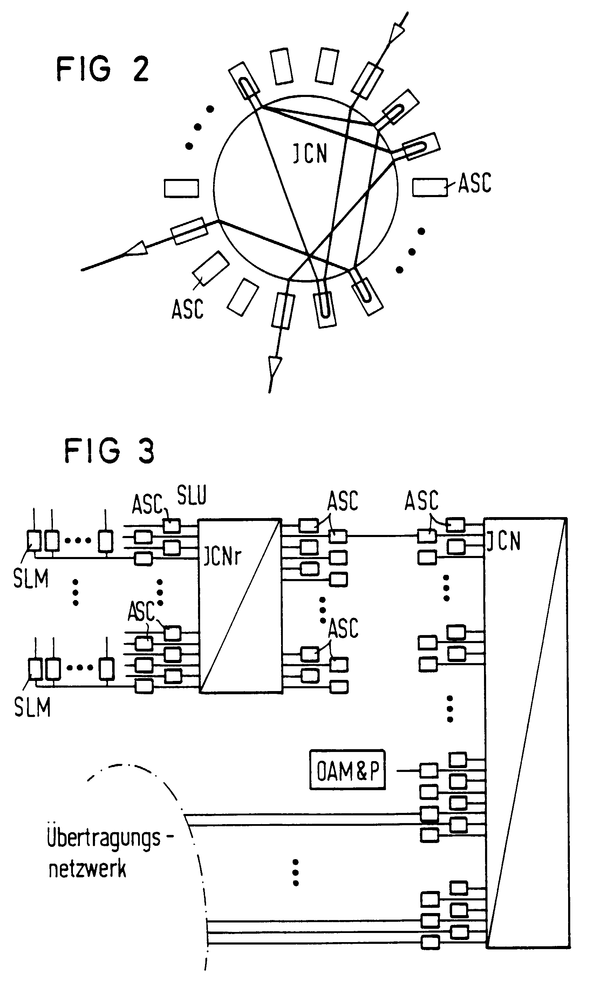

Die im Zusammenhang mit einer Vermittlung und dem Betrieb einer Vermittlungsstelle durchzuführenden Operationen sind in eine große Vielzahl von Teiloperationen unterteilt, die, jeweils bezogen auf eine einzige Verbindung, von einer großen Mehrzahl der Vermittlungssteuereinheiten entweder in eigenständiger Arbeitsweise oder im Zusammenwirken mit den jeweils zugeordneten Spezialprozessoren gemeinsam und zum Teil parallel ablaufend abgewickelt werden. Zu vermittelnde Informationen, beispielsweise STM-Informationen oder ATM-Informationen können hierbei das Koppelnetz ICN ggf. mehrfach durchlaufen, bevor sie auf eine abgehende Leitung gelangen, wie dies in FIG 2 symbolisch veranschaulicht ist.

Die erwähnten Vermittlungssteuereinheiten weisen einen lokalen Speicher auf und sind so konzipiert, daß sie außer dem eigentlichen Durchschalten von Verbindungswegen noch eine Reihe anderer Aufgaben übernehmen können.

So können sie im Zusammenhang mit besonderen Diensten, wie Broadcasting, A-/law/u.law-Umsetzung, Dämpfung und Interworking die erforderlichen Operationen übernehmen. Im Zusammenhang mit der Behandlung von ATM-Informationen können sie das Paketieren und Depaketieren übernehmen und bei der Behandlung von Informationen des Synchronous Optical Network (SONET) kann ihre Aufgabe das Einfügen und Extrahieren des Zellenkopfes (SOH) sein.

Wie schon erwähnt, realisieren sie zusammen mit einem Schnittstellenprozessor I/F die diversen Schnittstellen.

Für die Behandlung des SONET-Zellenkopfes (SOH-Behandlung) kommt ein Zusammenwirken von Vermittlungssteuereinheit ASC und Steuerprozessor CTP in Frage.

Die Abwicklung der Operationen im Zusammenhang mit der Echounterdrückung und der Kompression und Dekompression aus dem Mobilfunknetz stammender bzw. für dieses bestimmter Informationen könnte Aufgabe eines digitalen Signalprozessors DSP sein. Die Vermittlungssteuereinheit, der ein solcher Signalprozessor zugeordnet ist, hätte in diesem Fall lediglich die Aufgabe der Zufuhr und der Weitergabe der Informationen.

Für Steuerungsaufgaben im Zusammenhang mit der Vermittlungssteuerung, der Fehlerbehandlung und mit Betriebs-und Wartungsaufgaben werden die erwähnten Steuerprozessoren CTP herangezogen. Auch in diesen Falle haben die Vermittlungssteuereinheiten ASC, denen diese Steuerprozessoren zugeordnet sind, lediglich die Aufgabe der Informationsübergabe bzw. Informationsweitergabe.

Die Schnittstellen zwischen dem Koppelnetz ICN und den Vermittlungssteuereinheiten ACN sowie zwischen den Vermittlungssteuereinheiten und den zugeordneten Prozessoren DSP, CTP bzw. JIF zur Abwicklung von Spezialoperationen sind dabei einheitlich. Es ist hiermit eine freizügige Anordnung möglich, außerdem kann zum Teil auf eine individuelle Verdrahtung vor allen auf diejenige der Rückwandverdrahtungsebene verzichtet werden.

Das Koppelnetz gemäß FIG 1 mit angeschlossenen Vermittlungssteuereinheiten und Spezialprozessoren kann, wie die FIG 3 zeigt, durch ein gleichartiges Koppelnetz ICNr einer räumlich abgesetzten Einheit SLU ergänzt sein, die jedoch nach außen hin lediglich über Teilnehmeranschlußschaltungen SLM mit Teilnehmeranschlußleitungen beschaltet ist. Dabei kann der Funktionsumfang der im Zusammenhang mit an die Teilnehmeranschlußleitungen angeschlossenen Endgeräte abzuwickelnden Operationen freizügig auf die abgesetzte Einheit und auf den zentralen Teil der Vermittlungsstelle verteilt sein.

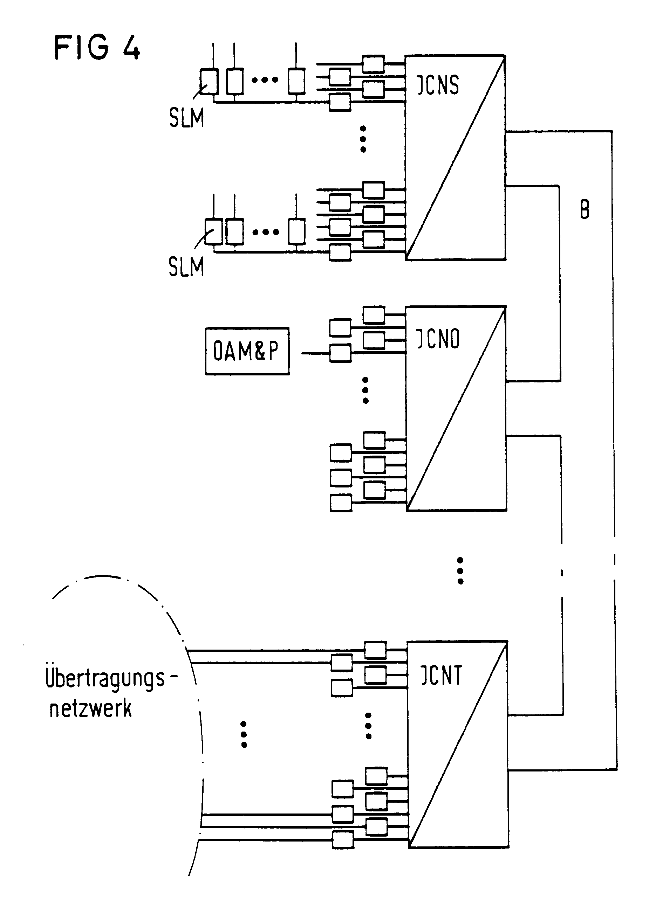

Die FIG 4 zeigt eine andere Art der Gliederung der erfindungsgemäßen digitalen Vermittlungsanlage. Das Koppelnetz ICN ist hier nämlich in drei Arten von Untereinheiten unterteilt, d. h. Untereinheiten ICNS, die dem Anschluß von Teilnehmerleitungen dienen, Untereinheiten ICNT, die dem Anschluß von Verbindungsleitungen dienen, und Untereinheiten ICNO, die dem Anschluß von Bedienungs- und Wartungseinrichtungen dienen. Die drei Arten von Untereinheiten stehen durch eine Übertragungseinrichtung B miteinander in Verbindung.

Es sind auch Mischformen zwischen den Strukturen gemäß FIG 3 und FIG 4 möglich.

## Patentansprüche

1. Digitale Fernmeldevermittlungsanlage für die Vermittlung von Sprach- Video- und Datensignalen,
**gekennzeichnet durch**
eine Vielzahl gleichartiger, jeweils einen lokalen Speicher aufweisender Vermittlungssteuereinheiten (ASC), die über ein der Leitungsverbindungsherstellung dienendes Koppelnetz (ICN) untereinander verbindbar sind, wobei dieses Koppelnetz (ICN) in seiner Durchschalteleistung derart weit über den Anforderungen im Zusammenhang mit der eigentlichen Leitungsverbindungsherstellung liegt, daß jeweils eine große Mehrzahl der vermittlungssteuereinheiten (ASC) für eine teilweise parallel ablaufende Abwicklung sowohl den Anschlußbereich als auch den Zentralbereich der Vermittlung betreffenden kleinen, in Zusammenhang mit ein und derselben Verbindung stehenden Teiloperationen einbezogen werden kann, und daß einem Teil dieser Vermittlungssteuereinheiten Prozessoren (DSP, CTP, I/F) zur Abwicklung von in ihrer Komplexität oder Spezialisierung über diejenige der Teiloperationen hinausgehenden, mit der betreffenden Verbindung in Zusammenhang stehenden Spezialoperationen zugeordnet sind.

2. Fermeldevermittlungsanlage nach Anspruch 1,
**dadurch gekennzeichnet** ,
daß zwischen dem Koppelnetz (ICN) und den Vermittlungssteuereinheiten (ASC) sowie zwischen den Vermittlungssteuereinheiten und den ihnen zugeordneten Prozessoren (DSP, CTP, JIF) für die Abwicklung von Spezialoperationen einheitliche Schnittstellen vorgesehen sind.

3. Fernmeldevermittlungsanlage nach Anspruch 1,
**dadurch gekennzeichnet,**
daß das Koppelnetz (ICN) eine zentrale Einheit bildet und mit gleichartigen, räumlich abgesetzten Einheiten (SLU) zusammenarbeitet, über die Verbindungen zu Teilnehmerleitungen hergestellt werden.

4. Fernmeldevermittlungsanlage nach Anspruch 1,
**dadurch gekennzeichnet,**
daß das Koppelnetz in im Hinblick auf die Herstellung von Verbindungen zu Teilnehmerleitungen, zu Verbindungsleitungen und zu Bedienungs- und Wartungseinrichtungen getrennte Untereinheiten (ICNS, ICNO, ICNT) gegliedert ist, die durch eine Übertragungseinrichtung (B) miteinander verbunden sind.

5. Fernmeldevermittlungsanlage nach einem der vorhergehenden Ansprüche,
**dadurch gekennzeichnet,**
daß die Prozessoren zur Abwicklung von Spezialoperationen Signalprozessoren (DSP) sind.

6. Fernmeldevermittlungsanlage nach einem der Ansprüche 1 bis 4,
**dadurch gekennzeichnet,**
daß die Prozessoren zur Abwicklung von Spezialoperationen Steuerprozessoren (CTP) sind.

7. Fernmeldevermittlungsanlage nach Anspruch 6,
**dadurch gekennzeichnet,**
daß neben Steuerprozessoren (CTP) digitale Signalprozessoren (DSP) als Prozessoren zur Abwicklung von Spezialoperationen vorgesehen sind.

8. Fernmeldevermittlungsanlage nach Anspruch 6 oder 7,
**dadurch gekennzeichnet,**
daß zusätzlich Schnittstellenprozessoren (I/F) als Prozessoren für die Abwicklung von Spezialoperationen vorgesehen sind.

## Claims

1. Digital telecommunication switching system for switching voice, video and data signals, characterized by a multiplicity of similar switching control units (ASC) having in each case a local memory, which can be connected to one another via a switching network (ICN) used for establishing the circuit connection, the call throughput rate of this switching network (ICN) being that much higher above the requirements connected with the actual establishment of circuit connections that in each case a large plurality of the switching control units (ASC) can be involved in a partially parallel handling of small part operations which are connected with one and the same connection and relate both to the service area and the central area of the exchange, and that processors (DSP, CTP, I/F) for handling special operations which are connected with the relevant connection and exceed the complexity or specialization of both of the part operations are allocated to some of these switching control units.

2. Telecommunication switching system according to Claim 1, characterized in that uniform interfaces are provided between the switching network (ICN) and the switching control units (ASC) and between the switching control units and the processors (DSP, CTP, JIF) allocated to them for handling special operations.

3. Telecommunication switching system according to Claim 1, characterized in that the switching network (ICN) forms a central unit and cooperates with similar remote units (SLU) via which connections are established to subscriber lines.

4. Telecommunication switching system according to Claim 1, characterized in that the switching network is organized in subunits (ICNS, ICNO, ICNT) which are separate with respect to the establishment of connections to subscriber lines, to trunk lines and to operating and maintenance facilities and which are connected to one another by a transmission facility (B).

5. Telecommunication switching system according to one of the preceding claims, characterized in that the processors for handling special operations are signal processors (DSP).

6. Telecommunication switching system according to one of Claims 1 to 4, characterized in that the processors for handling special operations are control processors (CTP).

7. Telecommunication switching system according to Claim 6, characterized in that, in addition to control processors (CTP), digital single processors (DSP) are provided as processors for handling special operations.

8. Telecommunication switching system according to Claim 6 or 7, characterized in that additionally interface processors (I/F) are provided as processors for handling special operations.

## Revendications

1. Central numérique de télécommunication pour la commutation de signaux vocaux, de signaux vidéo et de données,
**caractérisé par**
une pluralité d'unités de commande de commutation (ASC), d'un même modèle et comportant chacune une mémoire locale, qui peuvent être reliées les unes avec les autres par l'intermédiaire d'un champ de couplage (ICN) servant à l'établissement de lignes de liaison, la puissance de commutation de ce champ de couplage (ICN) dépassant tellement les conditions imposées en ce qui concerne l'établissement proprement dit des lignes de jonction ou de liaison, qu'une grande majorité d'unités de commande de commutation (ASC) peut, selon le cas, être mise à contribution pour l'exécution, se déroulant partiellement en parallèle, de petites opérations partielles concernant aussi bien la zone de raccordement que la zone principale du central de commutation et se trouvant en relation avec une seule et même connexion et que des processeurs (DSP, CTP, I/F) sont attribués à une partie de ces unités de commande de commutation pour l'exécution d'opérations spéciales dépassant, dans leur complexité ou leur spécialisation, celles des opérations partielles, ces opérations spéciales se trouvant en relation avec la liaison considérée.

2. Central numérique de télécommunication conforme à la revendication 1,
**caractérisé par**
le fait que des interfaces uniformes sont prévues entre le champ de couplage (ICN) et les unités de commande de commutation (ASC), ainsi qu'entre les unités de commande de commutation et les processeurs (DSP, CTP, I/F) qui leur sont affectés pour l'exécution d'opérations spéciales.

3. Central numérique de télécommunication conforme à la revendication 1,
**caractérisé par**
le fait que le champ de couplage (ICN) forme une unité centrale et travaille en commun avec des unités (SLU), toutes d'un même type et localement décentralisées, par l'intermédiaire desquelles sont établies les liaisons vers les lignes d'abonnés.

4. Central numérique de télécommunication conforme à la revendication 1,
**caractérisé par**
le fait que le champ de couplage est, en vue de l'établissement de liaisons vers des lignes d'abonnés, vers des lignes de jonction et vers des dispositifs de commande et de maintenance, divisé en sous-ensembles (ICNS, ICNT, ICNO) qui sont reliés les uns aux autres par un dispositif de transmission (B).

5. Central numérique de télécommunication conforme à une des revendications précédentes,
**caractérisé par**
le fait que les processeurs pour l'exécution d'opérations spéciales sont des processeurs de signalisation (DSP).

6. Central numérique de télécommunication conforme à une des revendications i à 4,
**caractérisé par**
le fait que les processeurs pour l'exécution d'opérations spéciales sont des processeurs de commande (CTP).

7. Central numérique de télécommunication conforme à la revendication 6,
**caractérisé par**
le fait que, en plus des processeurs de commande (CTP), des processeurs numériques de signalisation (DSP) sont prévus comme processeurs pour l'exécution d'opérations spéciales.

8. Central numérique de télécommunication conforme à la revendication 6 ou à la revendication 7,
**caractérisé par**
le fait que, en outre, des processeurs d'interface (I/F) sont prévus comme processeurs pour l'exécution d'opérations spéciales.
